# NEUE EUROPÄISCHE PATENTSCHRIFT

(11) **EP 3 473 437 B2**
(45) Veröffentlichungstag und Bekanntmachung des Hinweises auf die Entscheidung über den Einspruch: **30.04.2025**
(45) Hinweis auf die Patenterteilung: 12.10.2022
(21) Anmeldenummer: 18196314.1
(22) Anmeldetag: 24.09.2018
(51) Int. Cl.: B29C 65/18, B65D 75/30

(54) **MEHRLAGIGER FOLIENVERBUND SOWIE VERFAHREN ZUR HERSTELLUNG EINES MEHRLAGIGEN FOLIENVERBUNDES**
MULTILAYER FILM COMPOSITE AND METHOD AND DEVICE FOR MANUFACTURING A MULTILAYER COMPOSITE FILM
FILM COMPOSITE MULTICOUCHE AINSI QUE PROCÉDÉ ET DISPOSITIF DE FABRICATION D'UN FILM COMPOSITE MULTICOUCHE

(30) Priorität: 19.10.2017 DE 102017009889
(43) Veröffentlichungstag der Anmeldung: 24.04.2019
(73) Patentinhaber: Superseven GmbH, 21465 Wentorf (DE)
(72) Erfinder: Seevers, Sven, 21465 Wentorf (DE)
(74) Vertreter: Klickow & Wetzel PartGmbB

(56) Entgegenhaltungen:
- WO-A1-2007/046974
- WO-A1-2010/055516
- WO-A1-93/16931
- WO-A1-93/23310
- DE-A1- 102010 039 089
- DE-T2- 69 309 265
- US-A- 4 997 504

## Beschreibung

Die Erfindung betrifft einen mehrlagigen Folienverbund sowie ein Verfahren zur Herstellung eines mehrlagigen Folienverbundes, insbesondere im Sinne eines Behältnisses aus auf Cellulose basierender Folie zur Lagerung oder zum Transport von Gegenständen oder Materialien.

Beschichtete auf Cellulose basierende Folien werden aktuell durch ein Heißsiegelverfahren beispielsweise zu Beuteln oder ähnlichen Behältnissen zur Lagerung oder zum Transport von Gegenständen oder Materialien verarbeitet. In bekannten Heißsiegelverfahren werden mindestens zwei gegenüberliegende Lagen mindestens einer Folie in einem Bereich unter der Einwirkung von Temperatur, Druck und Zeit miteinander verbunden. Eine im Verbindungsbereich vollflächig aufgebrachte Harzschicht verschmilzt dabei die Folienlagen miteinander. In industriellem Umfeld werden für das Heißsiegelverfahren in der Regel Schweißbalken oder Schweißräder eingesetzt, die unter einem Druck gegeneinandergepresst werden und die zwischenliegenden Folienlagen in diesem Bereich verbinden. Die entstandene Verbindung wird als Schweiß- oder Siegelnaht bezeichnet.

Aus der WO 9323310 ist bereits eine Vorrichtung zur Herstellung eines Folienverbundes bekannt, wobei unter Verwendung eines Heißsiegelverfahrens eine Siegelnaht erzeugt wird. Eine ähnliche Vorrichtung wird auch in der WO 9316931 beschrieben.

Weitere Vorrichtungen zur Herstellung von Folienverbunden unter Verwendung von Heißsiegelverfahren werden in der US 4997504, der WO 2007046974, der DE 10 20 10 093 089 sowie der WO 2010055516 beschrieben.

Ein Problem, das bei den mithilfe bekannter Vorrichtungen und Verfahren hergestellten Schweißnähten zur Verbindung cellulosebasierter Folien auftritt, ist eine geringe mechanische Stabilität und Belastbarkeit der Schweißnähte.

Eine Aufgabe der Erfindung ist es, einen Folienverbund auf Cellulosebasis mit einer erhöhten mechanischen Belastbarkeit der Schweißnaht zu realisieren.

Diese Aufgabe wird erfindungsgemäß durch einen Folienverbund gemäß Patentanspruch 1 gelöst. Dadurch wird sowohl die Oberfläche im Verbindungsbereich vergrößert, als auch eine zusätzliche mechanische Verbindung durch ein Ineinandergreifen der Folienlagen erreicht.

Eine weitere Aufgabe der Erfindung ist es, ein Verfahren zu definieren, durch das auf Cellulose basierende Folien mit einer höheren Festigkeit miteinander verbunden werden.

Diese Aufgabe wird erfindungsgemäß durch ein Verfahren zur Herstellung eines mehrlagigen Folienverbundes aus mindestens einer cellulosebasierten Folie gemäß Patentanspruch 8 gelöst.

Im Folgenden wird der erfindungsgemäße Folienverbund in beispielhafter Ausführungsform erläutert. Es zeigt:
- Fig. 1: eine perspektivische Ansicht eines erfindungsgemäßen Folienverbundes mit drei Schweißnähten,
- Fig. 2: eine perspektivische Darstellung eines erfindungsgemäßen Folienverbundes mit einer Schweißnaht,
- Fig. 3: eine perspektivische Ansicht eines erfindungsgemäßen Folienverbundes mit Griffloch,
- Fig. 4: eine perspektivische Ansicht einer auf Cellulose basierenden Folie im Schichtaufbau,
- Fig. 5: eine perspektivische Ansicht einer Schweißvorrichtung zur Verbindung cellulosebasierter Folien,
- Fig. 6: eine perspektivische Ansicht einer alternativen Ausführungsform einer Schweißvorrichtung zur Verbindung cellulosebasierter Folien,
- Fig. 7: eine Teilansicht eines Schweißbalkens,
- Fig. 8: einen Querschnitt eines Schweißbalkens mit einseitiger Prägung,
- Fig. 9: einen Querschnitt eines Schweißbalkens mit zweiseitiger Prägung,
- Fig. 10: fünf Teilansichten verschiedener Schweißbalken,
- Fig. 11: einen Querschnitt durch einen Schweißbalken mit zusätzlicher fraktaler Struktur,
- Fig. 12: einen Querschnitt durch ein Schweißbalkenpaar nach dem Prinzip der Verschiedenartigkeit,
- Fig. 13: eine Draufsicht auf einen Schweißbalken nach dem Prinzip der Verschiedenartigkeit,
- Fig. 14: einen Schnitt durch ein Perforationswerkzeug als Element eines Schweißbalkens und
- Fig. 15: eine Ansicht einer Heißsiegelnaht einer auf Cellulose basierten Folie.

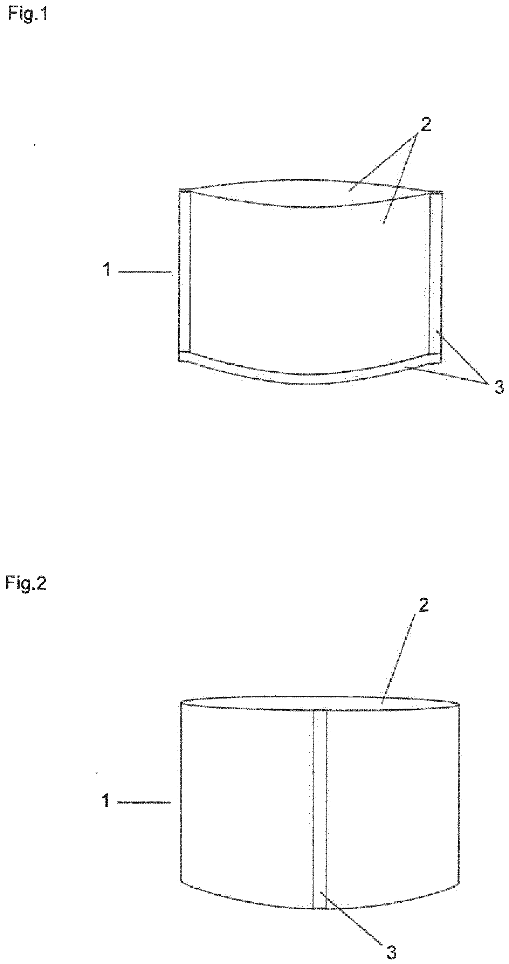

In Fig. 1 ist ein erfindungsgemäßer Folienverbund (1) in einer perspektivischen Ansicht dargestellt. Der aus zwei Folienlagen (2) ausgebildete Folienverbund (1) weist an drei seiner Ränder jeweils eine Siegelnaht (3) auf. Die obere Seite ist nicht versiegelt und geöffnet, sodass ein beutelartiger Körper entsteht.

In Fig. 2 ist eine weitere Ausführungsform eines erfindungsgemäßen Folienverbunds (1) dargestellt. Eine Folie (2) ist dabei an zwei vor dem Umschlagen gegenüberliegenden Seiten durch eine Siegelnaht (3) miteinander verbunden, sodass ein schlauchartiger Körper entsteht.

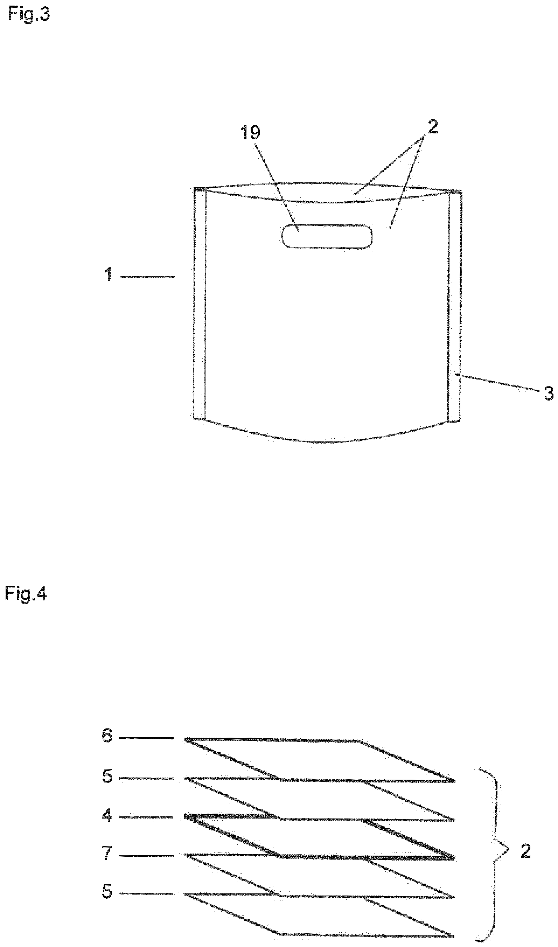

In Fig. 3 ist eine Ausführungsform eines erfindungsgemäßen Folienverbunds (1) mit einer Durchdringung (19) der Folie (2) an zwei Stellen dargestellt. Die Durchdringung (19) der Folie (2) ist an gegenüberliegenden Positionen der Folie (2) im Folienverbund (1) angeordnet, sodass die Löcher (19) als Griffvorrichtung nutzbar sind.

Es ist bei der Form des Loches (19) oder der Löcher, das bzw. die in einem erfindungsgemäßen Folienverbund (1) angeordnet sein können an verschiedene Ausbildungsformen gedacht. Beispielsweise kann ein Loch (19) länglich mit abgerundeten Ecken, kreisrund oder als Euroloch ausgebildet sein. Auch ist bei der Anzahl und der Position des bzw. der Löcher an verschiedene Ausführungsformen gedacht. So kann ein erfindungsgemäßer Folienverbund in vorteilhaften Ausführungsformen kein Loch (19), genau ein Loch (19), zwei Löcher (19) oder mehr Löcher (19) aufweisen. Die Positionierung der Löcher (19) bzw. des Loches kann beispielsweise in einem oberen Bereich mittig in einem erfindungsgemäßen Folienverbund (1) oder an beliebigen anderen Orten erfolgen.

In Fig. 4 ist ein beispielhafter Schichtaufbau einer auf Cellulose basierenden Folie (2) dargestellt, die für einen erfindungsgemäßen Folienverbund (1) genutzt werden kann. Die Kernschicht (4) besteht aus Cellulose und macht in einer vorteilhaften Ausführungsform 89 % bis 93 % des Gesamtgewichtes der Folie (2) aus. Besonders vorteilhaft ist ein Anteil von 90 % Cellulose. Der Cellulosekern (4) kann transparent und klar oder pigmentiert ausgebildet sein. Zusätzlich verfügt die Folie (2) über zwei Harzschichten (5). Die Harzschichten (5) sind transparent und begünstigen durch ihre thermoplastischen Eigenschaften ein Heißsiegelverfahren zur Verbindung von Folien (2). Zudem begünstigt die Versiegelung des Cellulosekerns (4) durch die Harzschichten (5) das Bedrucken entsprechender Folien (2). Zwischen dem Cellulosekern (4) und mindestens einer Harzschicht (5) kann eine Metallschicht (7) auf den Cellulosekern (4) aufgedampft sein. Die Folie (2) kann mindestens einseitig bedruckt sein, wodurch mindestens eine weitere Schicht (6) aus Druckfarbe entsteht. Weitere Bestandteile der Folie (2) sind Wasser mit einem Gewichtsanteil von bevorzugt 4 % bis 6 %, insbesondere bevorzugt 4,5 %, und Glycerin mit einem Anteil von 4 % bis 6 %, besonders bevorzugt von 5 %, sowie eine Beschichtung mit einem Gewichtsanteil von etwa 0,5 % der Folie. Das Glycerin kann als Weichmacher genutzt werden. Die Zusammensetzung der Folie variiert mit der Stärke der Folie in einem gewissen Bereich. Die Folie (2) hat eine Stärke von bevorzugt 19 µm bis 45 µm.

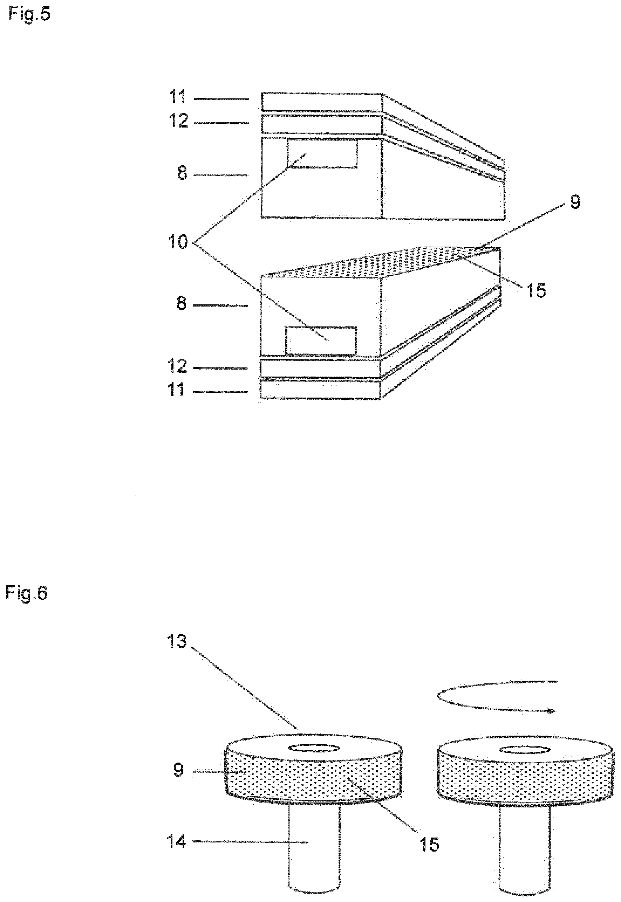

Fig. 5 zeigt eine perspektivische Ansicht einer Schweißvorrichtung in Form eines Schweißbalkenpaares. Die Schweißbalken (8) sind quaderförmig ausgebildet und nehmen in einer Nut jeweils ein Heizelement (10) auf. Ein Schweißbalkenpaar kann sich beispielsweise aus zwei Schweißbalken (8) aus einem nicht anhaftenden metallischen Werkstoff, wie zum Beispiel Aluminium, oder aus einem Schweißbalken (8) aus einem nicht anhaftenden metallischen Werkstoff und einem Schweißbalken (8) aus einem nicht anhaftenden Kunststoff, wie zum Beispiel Silikon, zusammensetzen. Die einer zu verschweißenden Folie (2) zugewandte Oberflächen (9) der Schweißvorrichtung weisen eine Struktur (15) auf, die eine Prägung einer Sieglenaht (3) ermöglicht. Zwischen der Befestigungseinrichtung (11) an einer Heißsiegelmaschine und einem Schweißbalken (8) ist ein Stoßdämpfer (12) angebracht.

In Fig. 6 ist eine alternative Ausführungsform eines Schweißvorrichtungspaares dargestellt. Dieses ist als ein Paar von Schweißrädern (13) ausgebildet, die in einem Heißsiegelverfahren eine gegenläufige Rotationsbewegung um eine jeweils zentral mit einem Schweißrad (13) verbundene Achse (14) mit einem integrierten Heizelement (10) durchführen. Die Oberflächen (9) der Schweißräder (13) weisen eine Prägestruktur (15) auf.

In alternativen Ausführungsformen von Schweißvorrichtungspaaren weist mindestens einer der Schweißbalken (8) bzw. eines der Schweißräder (13) auf seiner Prägeoberfläche (9) eine Prägestruktur (15) auf.

Im erfindungsgemäßen Heißsiegelverfahren wird mindestens eine Schweißvorrichtung (8, 13) des Schweißvorrichtungspaares über ein Heizelement (10) im Impuls- oder Dauerbetrieb beheizt. Dabei entstehen Temperaturen zwischen 80 °C und 200 °C, die für das Verschmelzen der thermoplastischen Schichten (5) der Folienlagen (2) erforderlich sind. Die Siegelzeit, in der die Folienlagen (2) zwischen den Schweißvorrichtungen (8) unter einem Anpressdruck zusammengepresst werden, beträgt vorzugsweise zwischen 0,1 s und 1s. Der Anpressdruck beträgt bevorzugt 5 N/cm² bis 30 N/cm². Mit dem erfindungsgemäßen Verfahren zur Heißsiegelverbindung von Folien (2) werden Siegelnahtbreiten von bevorzugt 4 mm bis 20 mm erreicht. Die mithilfe der mindestens einen Prägeoberfläche (9) des Schweißvorrichtungspaares durch die Lagen des Folienverbundes hindurch geprägte Struktur im Bereich einer Schweißnaht, sorgt für eine zusätzliche Verbindung der Folienlagen (2) durch einen Formschluss zwischen den verbundenen Lagen (2).

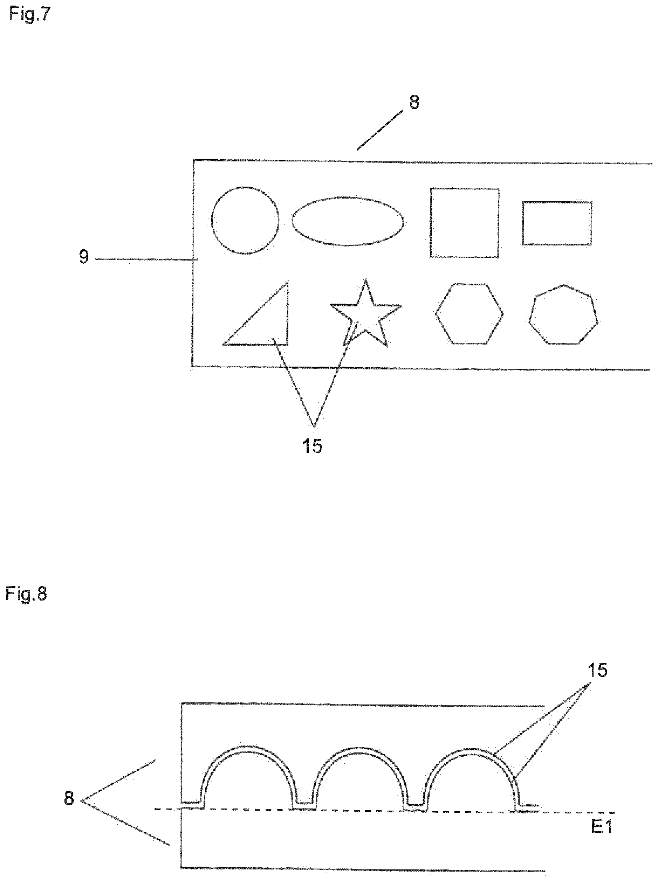

Fig. 7 zeigt eine Draufsicht auf die Prägeoberfläche (9) einer Schweißvorrichtung (8). Die Prägeoberfläche (9) auf der den zu versiegelnden Folienlagen (2) zugewandten Seite der Schweißvorrichtung (8) weist verschieden geformte Erhöhungen und Vertiefungen auf, die in ihrer Gesamtheit das Prägemuster (15) der Schweißvorrichtung (8) und damit auch einer Siegelnaht (3) definieren. Erfindungsgemäß ist das Prägemuster (15) als eine Kombination verschiedener geometrischer Formen wie beispielsweise einem Kreis, einer Ellipse, einem Quadrat und einem Dreieck ausgebildet. Die Strukturgröße der Prägeoberfläche (9) ist an die Verformbarkeit des Materials der mindestens einen Folie (2) angepasst.

In Fig. 8 ist eine Teilansicht eines Schnittes durch ein Schweißvorrichtungspaar, ausgebildet als Schweißbalken (8), dargestellt. Das Prägemuster (15) des gezeigten Schweißbalkenpaares (8) ist in Prägerichtung halbkreisartig und einseitig ausgebildet, was bedeutet, dass sich die Prägestruktur (15) aus einer Ebene E1 im Wesentlichen in eine Richtung erstreckt.

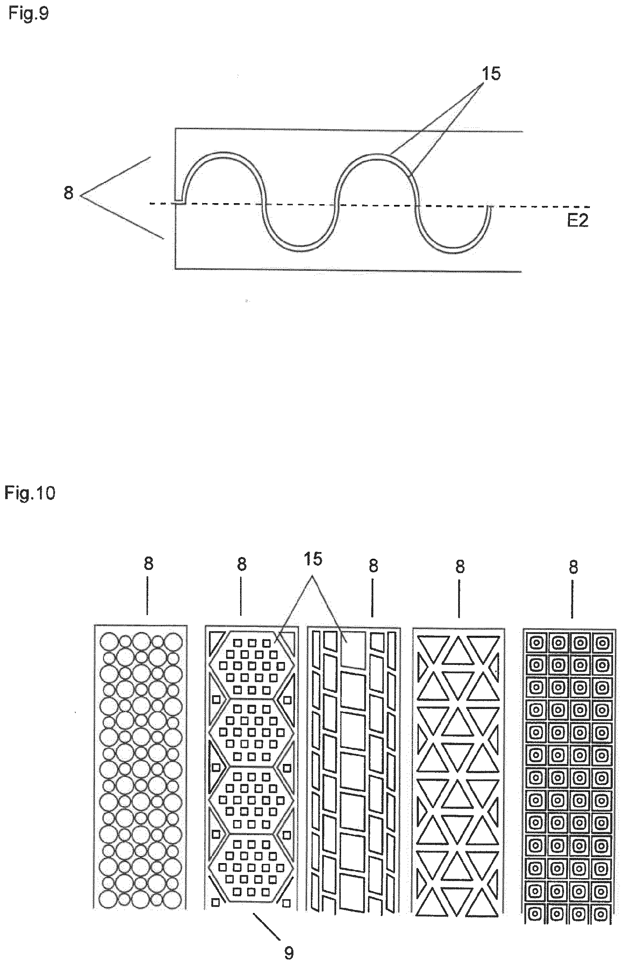

In Fig. 9 ist eine Teilansicht eines Schnittes durch eine alternative Ausführungsform eines Schweißvorrichtungspaares, ausgebildet als zwei Schweißbalken (8), dargestellt. Das Prägemuster (15) des gezeigten Schweißbalkenpaares (8) ist in Prägerichtung halbkreisartig und zweiseitig ausgebildet, was bedeutet, dass sich die Prägestruktur (15) aus einer Ebene E2 in zwei Richtungen erstreckt.

Fig. 10 zeigt eine Draufsicht auf eine Teilansicht von fünf weiteren Prägemustern (15) im Bereich der Oberfläche (9) einer Schweißvorrichtung (8). Jedes der dargestellten individuellen Prägemuster (15) besitzt ein Grundmuster, das sich regelmäßig wiederholt. Das Grundmuster kann aus einer oder mehreren Grundformen, wie beispielsweise Kreisen, Rechtecken, Waben, Dreiecken oder Trapezen, bestehen.

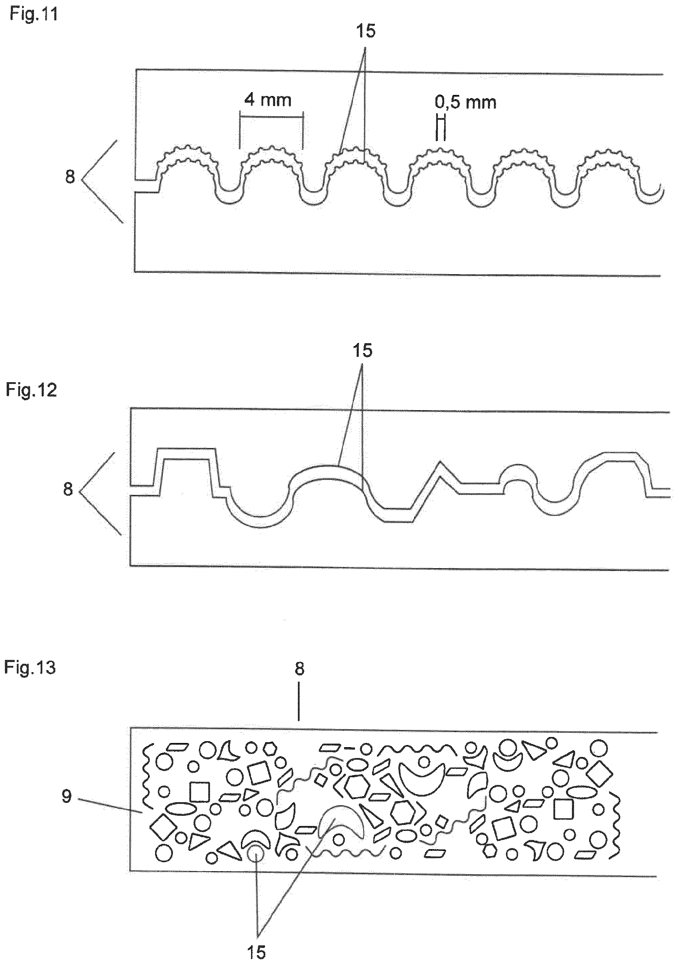

In Fig. 11 ist ein Ausschnitt eines vertikalen Schnitts einer Schweißvorrichtung dargestellt. Die Prägestruktur (15) ist in ihrer Grundform als eine gleichmäßige Verteilung von Halbkugeln als Aussparungen in der Oberfläche (9) der Schweißvorrichtung (8) ausgebildet. Weiterhin weist die Prägestruktur (15) in den Oberflächen der Halbkugeln weitere Aussparungen auf, die ein fraktale Struktur bilden. Die Halbkugeln weisen bevorzugt einen Durchmesser vom etwa 4 mm auf, während die fraktale Strukturgröße in einer Größenordnung von bevorzugt 0,5 mm liegt. Ziel der Kombination einer übergeordneten Struktur mit einer fraktalen Struktur als Prägestruktur (15) ist die Erzeugung einer möglichst großen Oberfläche im Verbindungsbereich (3) der Folienlagen (2).

Fig. 12 zeigt einen vertikalen Schnitt eines Schweißbalkenpaares (8). Das Prägemuster (15) ist in der gezeigten Ausführungsform ungleichmäßig ausgebildet und folgt dem Prinzip der Verschiedenartigkeit. Die Prägestruktur (15) weist in ihrem Querschnitt dabei eine möglichst hohe Anzahl verschiedener Strecken, Radien und Winkel auf. Die Verschiedenartigkeit wird in der dargestellten Ausführungsform durch die Kombination verschiedener Grundformen und freier Formen zu einem zweiseitig ausgebildeten Prägemuster (15) erreicht.

Eine Schweißvorrichtung (8, 13) kann mit einem einseitig oder einem zweiseitig ausgebildeten Prägemuster (15) nach dem Prinzip der Verschiedenartigkeit versehen sein.

Fig. 13 stellt eine Draufsicht auf eine Ausführungsform eines Schweißbalkens (8) nach dem Prinzip der Verschiedenartigkeit dar. In der Prägeoberfläche (9) sind möglichst viele verschiedene Formen als Prägestruktur (15) angeordnet. Vorteilhaft werden mindestens drei verschiedene Formen, besonders vorteilhaft mindestens zehn verschiedene Formen, genutzt.

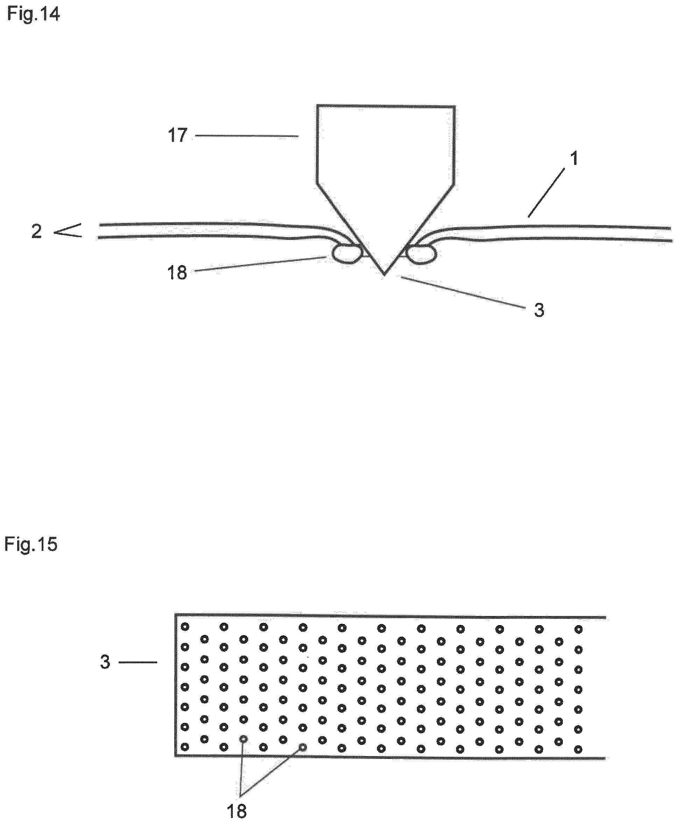

In Fig. 14 ist ein Perforationselement (17) einer Ausführungsform einer Schweißvorrichtung dargestellt. Das Perforationselement (17) ragt in der Basis als zylindrischer Körper aus der Oberfläche (9) einer Schweißvorrichtung heraus und verjüngt sich in von der Schweißvorrichtung abgewandter Richtung in Form eines Kegels. Weiterhin ist sind zwei Folienlagen (2) dargestellt, die im Bereich des Perforationselementes (17) durch eine Schweißnaht (3) miteinander verbunden sind. Die Verbindung ist durch eine Perforation der Folienlagen (2) mit dem Perforationselement (17) der Schweißvorrichtung und einem Verschweißen der Harzschichten (5) realisiert. Auf der dem Perforationselement (17) abgewandten Seite des Folienverbundes (1) ist durch die Perforationsverschweißung ein thermoplastischer Wulst (18) ausgebildet.

In einem erfindungsgemäßen Heißsiegelverfahren zur Verbindung von cellulosebasierten Folienlagen (2) unter Verwendung einer Schweißvorrichtung mit Perforationselementen (17) werden die Folienlagen (2) unter der Einwirkung von Hitze, Druck und Zeit verformt und in den Bereichen der Perforationselemente (17) durchdrungen. Je nach Form der Perforationselemente (17) kann diese Durchdringung kreisrund, für ein als Kreiskegel ausgebildetes Perforationselement (17), oder beispielsweise eckig, für ein als Pyramide ausgebildetes Perforationselement (17), sein. Das thermoplastische Material (5) wird durch die Hitzeeinwirkung geschmolzen, durch die Folienöffnung gedrückt, wirft sich an den Rändern der Folienöffnung in der Form eines Wulstes (18) auf und erkaltet nachdem sich die thermoplastischen Schichten (5) der Folienlagen (2) verschmolzen haben.

Eine beispielhafte Darstellung einer durch ein Heißsiegelverfahren mit Perforationselementen (17) erzeugten Siegelnaht (3) ist in Fig. 15 als Draufsicht dargestellt. In regelmäßigen Abständen angeordnet, sind thermoplastischen Wulste (18) um die Folienöffnungen herum zu erkennen.

Dadurch, dass im Bereich einer Heißsiegelmaschine im Vergleich zu einer herkömmlichen Heißsiegelvorrichtung für Folien aus thermoplastischem Kunststoff im Wesentlichen nur die Schweißvorrichtungen ausgetauscht werden müssen, sind vorhandene Maschinen einfach und kostengünstig derart umrüstbar, dass mithilfe der Schweißvorrichtungen das erfindungsgemäße Heißsiegelverfahren zur Herstellung eines erfindungsgemäßen Folienverbundes (1) umsetzbar ist.

## Patentansprüche

1. Folienverbund (1) aus mindestens zwei Lagen mindestens einer cellulosebasierten Folie (2), wobei die Verbindung durch mindestens eine Schweiß- bzw. Siegelnaht (3) realisiert ist, in der sich dreidimensional geprägte Strukturen mindestens bereichsweise durch die mindestens zwei verbundenen Lagen (2) erstrecken, wobei die mindestens eine Folie (2) aus mehreren Schichten aufgebaut ist und wobei die mindestens eine Folie (2) mindestens aus einer Kernschicht (4) aus überwiegend Cellulose und zwei thermoplastischen Schichten (5) besteht, **dadurch gekennzeichnet, dass** die geprägten Strukturen im Bereich der Siegelnaht (3) ein Prägemuster (15) bilden, das als eine Kombination verschiedener geometrischer Formen ausgebildet ist.

2. Folienverbund nach Anspruch 1, **dadurch gekennzeichnet, dass** die thermoplastischen Schichten (5) als Harzschichten realisiert sind.

3. Folienverbund (1) nach mindestens einem der vorstehenden Ansprüche, **dadurch gekennzeichnet, dass** die geprägten Strukturen im Bereich der Siegelnaht (3) ein Prägemuster (15) bilden, das als ein sich wiederholendes Muster, als ein Muster mit mindestens drei verschiedenen Elementen, bevorzugt mit mindestens zehn verschiedenen Elementen, oder als eine Perforation ausgebildet ist.

4. Folienverbund nach Anspruch 3, **dadurch gekennzeichnet, dass** das Prägemuster (15) ein Grundmuster besitzt, das sich regelmäßig wiederholt.

5. Folienverbund nach einem der Ansprüche 3 und 4, **dadurch gekennzeichnet, dass** das Prägemuster (15) als ein zweiseitiges Prägemuster (15) ausgebildet ist.

6. Folienverbund nach Anspruch 3, **dadurch gekennzeichnet, dass** das Prägemuster (15) Perforationen mit thermoplastischem Wulst (18) aufweist.

7. Folienverbund (1) nach mindestens einem der vorstehenden Ansprüche, **dadurch gekennzeichnet, dass** der Folienverbund (1) als ein Behältnis zum Transport oder zur Lagerung von Materialien oder Gegenständen ausgebildet ist.

8. Verfahren zur Herstellung eines mehrlagigen Folienverbundes (1) aus mindestens einer cellulosebasierten Folie (2), **dadurch gekennzeichnet, dass** ein mehrlagiger Folienverbund gemäß einem der Ansprüche 1 bis 7 hergestellt wird, dass es sich um ein Heißsiegelverfahren handelt und dass eine Schweißvorrichtung mit dreidimensional ausgebildeter Prägeoberfläche (9) verwendet wird.

9. Verfahren nach Anspruch 8, **dadurch gekennzeichnet, dass** eine Siegeltemperatur zwischen 80°C und 200°C genutzt wird.

10. Verfahren nach mindestens einem der Ansprüche 8 und 9, **dadurch gekennzeichnet, dass** die Siegelzeit zwischen 0,1 s und 1 s beträgt.

11. Verfahren nach mindestens einem der Ansprüche 8 bis 10, **dadurch gekennzeichnet, dass** ein Anpressdruck zwischen 5 N/cm² und 30 N/cm² genutzt wird.

## Claims

1. Film composite (1) composed of at least two plies of at least one cellulose-based film (2), the connection being realized through at least one welded or sealed seam (3), in which three-dimensionally embossed structures extend at least regionally through the at least two connected plies (2), the at least one film (2) being constructed of a plurality of layers and the at least one film (2) consists at least of a core layer (4) of predominantly cellulose and two thermoplastic layers (5), **characterized in that** the embossed structures in the region of the sealed seam (3) form an embossed pattern (15), which is designed as a combination of different geometric forms.

2. Film composite according to Claim 1, **characterized in that** the thermoplastic layers (5) are realized as resin layers.

3. Film composite (1) according to at least one of the preceding claims, **characterized in that** the embossed structures in the region of the sealed seam (3) form an embossed pattern (15) which is designed as a repeating pattern, as a pattern having at least three different elements, preferably having at least ten different elements, or as a perforation.

4. Film composite according to Claim 3, **characterized in that** the embossed pattern (15) possesses a basic pattern which regularly repeats.

5. Film composite according to either of Claims 3 and 4, **characterized in that** the embossed pattern (15) is designed as a two-sided embossed pattern (15).

6. Film composite according to Claim 3, **characterized in that** the embossed pattern (15) has perforations with a thermoplastic bead (18).

7. Film composite (1) according to at least one of the preceding claims, **characterized in that** the film composite (1) is designed as a container for transporting or for storing materials or articles.

8. Process for producing a multi-ply film composite (1) composed of at least one cellulose-based film (2), **characterized in that** a multi-ply film composite according to any of Claims 1 to 7 is produced, **in that** the process is a heat-sealing process and **in that** a welding apparatus with a three-dimensionally designed embossing surface (9) is used.

9. Process according to Claim 8, **characterized in that** a sealing temperature between 80°C and 200°C is utilized.

10. Process according to at least one of Claims 8 and 9, **characterized in that** the sealing time is between 0.1 s and 1 s.

11. Process according to at least one of Claims 8 to 10, **characterized in that** a pressing pressure between 5 N/cm2 and 30 N/cm2 is utilized.

## Revendications

1. Film composite (1) comprenant au moins deux couches d'au moins un film (2) à base de cellulose, la liaison étant réalisée par au moins un joint de soudure ou de scellement (3) dans lequel des structures estampées tridimensionnelles s'étendent au moins par zones à travers les au moins deux couches reliées (2), l'au moins un film (2) étant structuré en plusieurs couches et l'au moins un film (2) comprend au moins une couche centrale (4) essentiellement en cellulose et deux couches thermoplastiques (5), **caractérisé en ce que** les structures estampées dans la zone du joint de scellement (3) forment un motif estampé (15) qui est conçu comme une combination de différentes formes géométriques.

2. Film composite selon la revendication 1, **caractérisé en ce que** les couches thermoplastiques (5) sont réalisées sous forme de couches de résine.

3. Film composite (1) selon l'une au moins des revendications précédentes, **caractérisé en ce que** les structures estampées dans la zone du joint de scellement (3) forment un motif estampé (15) qui est conçu comme un motif répétitif, comme un motif comprenant au moins trois éléments différents, de préférence au moins dix éléments différents, ou comme une perforation.

4. Film composite selon la revendication 3, **caractérisé en ce que** le motif estampé (15) possède un motif de base qui se répète régulièrement.

5. Film composite selon l'une des revendications 3 et 4, **caractérisé en ce que** le motif estampé (15) est conçu comme un motif estampé (15) à deux côtés.

6. Film composite selon la revendication 3, **caractérisé en ce que** le motif estampé (15) comporte des perforations avec un bourrelet thermoplastique (18).

7. Film composite (1) selon l'une au moins des revendications précédentes, **caractérisé en ce que** le film composite (1) est conçu comme un récipient destiné au transport ou au stockage de matériaux ou d'objets.

8. Procédé de fabrication d'un film composite multicouche (1) à partir d'au moins un film (2) à base de cellulose, **caractérisé en ce qu'**un film composite multicouche est fabriqué selon l'une des revendications 1 à 7, **en ce qu'**il s'agit d'un procédé de scellage thermique et **en ce qu'**un dispositif de soudage est utilisé qui comporte une surface estampée tridimensionnelle (9).

9. Procédé selon la revendication 8, **caractérisé en ce qu'**une température de scellement est utilisée qui est comprise entre 80 °C et 200 °C.

10. Procédé selon l'une au moins des revendications 8 et 9, **caractérisé en ce que** le temps de scellement est compris entre 0,1 s et 1 s.

11. Procédé selon l'une au moins des revendications 8 à 10, **caractérisé en ce qu'**une pression de contact est utilisée qui est comprise entre 5 N/cm2 et 30 N/cm2.
